# EUROPÄISCHE PATENTSCHRIFT

(11) **EP 0 862 983 B1**
(45) Veröffentlichungstag und Bekanntmachung des Hinweises auf die Patenterteilung: **08.08.2001**
(21) Anmeldenummer: 98100666.1
(22) Anmeldetag: 16.01.1998
(51) Int. Cl.: B29C 47/88, B29C 47/34, B29C 47/96, B65H 26/02

(54) **Verfahren und Vorrichtung zum kontinuierlichen Abziehen eines Schmelzefilms aus einer Folien-produktionsanlage**
Method and apparatus for continuously pulling a film from a film producing installation
Procédé et dispositif pour le dévidage en continu de film à partir d'une installation de production de films

(30) Priorität: 05.03.1997 DE 19708886
(43) Veröffentlichungstag der Anmeldung: 09.09.1998
(73) Patentinhaber: LINDAUER DORNIER GESELLSCHAFT M.B.H, 88129 Lindau (DE)
(72) Erfinder: Rutz, Andreas, Dr., 88131 Lindau (DE); Müller, Adolf, 88138 Weissensberg (DE)

(56) Entgegenhaltungen:
- EP-A- 0 575 786
- EP-A- 0 654 433
- DE-A- 3 635 302
- DE-C- 3 907 036
- US-A- 4 609 336

## Beschreibung

Die Erfindung betrifft ein Verfahren und eine Vorrichtung zum kontinuierlichen Abziehen eines Schmelzefilms beim Auftreten einer definierten Prozeßstörung in einer Folienproduktionsanlage.

Bei der Herstellung von Folie aus thermoplastischem Kunststoff ist ein möglichst störungsfreies Arbeiten aller Anlagenteile, insbesondere der Extrusionsanlage erforderlich.

Nach einem Abschalten des Extrusionsprozesses z.B., dauert es erfahrungsgemäß relativ lange, bis sich nach erneutem Inbetriebsetzen des Extrusionsprozesses stabile thermische und rheologische Zustände einstellen.

Während dieser Zeit muß ein Folienherstellen unterbleiben. Neben dem in diesen Zeitintervallen entstehenden Produktionsausfall wird jedoch eine relativ große Menge thermoplastischer Kunststoffschmelze extrudiert, die nicht der Folienproduktion zugeführt werden kann.

Zum Abschalten des Extrusionsprozesses kann es kommen, wenn in den der Extrusion nachgeordneten Anlagenteilen einer Folienproduktionsanlage der extrudierte Schmelzefilm nicht kontinuierlich von der Kühlwalze, auf die der Extruder arbeitet, abgezogen wird.

Dies kann mannigfaltige Gründe haben.

Solche Gründe sind z.B. Reißen der Folie in einem der Kühlwalze nachgeordneten Anlagenbereich, wie z.B. im Bereich des Längsreckens, des Querreckens, im Bereich der Überführung der Folie vom Recken zum Wickler, z.B. ein Aufwickeln der Folie auf der von der Oberfläche einer Anlagenwalze nicht abgelösten Folie, oder z.B. durch Defekt eines Bauteils in der Folienproduktionsanlage.

Diese beispielhaft genannten Ursachen zwingen den Betreiber der Anlage, wenn nicht für ein kontinuierliches Abnehmen des Schmelzefilms durch Aufrechterhaltung einer aus dem Verstreckungsprozeß resultierenden und auf den Schmelzefilm wirkenden Zugkraft gesorgt wird, den Extrusionsprozeß durch Abschalten des Extruders zu unterbrechen.

Der kritische Bereich in einer Folienproduktionsanlage ist die Kühlwalze, auf die der Schmelzefilm mittels einer Breitschlitzdüse aufgebracht wird.

Solange der auf die Kühlwalze extrudierte Schmelzefilm kontinuierlich abgezogen wird, kann der Extrusionsprozeß kontinuierlich verlaufen. In bestimmten Fällen kann man auch den Durchsatz des Extruders herunterfahren, d.h. die Menge des erzeugten Extrudats je Zeiteinheit reduzieren.

Ist jedoch die erforderliche Zugkraft aus den bereits erwähnten Gründen in dem Schmelzefilm nicht mehr vorhanden, wird der Schmelzefilm nicht von der Kühlwalze abgelöst.

Das hat ein Aufwickeln des Schmelzefilms auf die drehangetriebene Kühlwalze zur Folge, was mit dem Abschalten des Extrusionsprozesses und des Kühlwalzenantriebes verbunden ist.

Aus der DE-A-36 35 302, auf die sich der Oberbegriff der unabhängigen Ansprüche 1 und 10 stützt, ist ein Verfahren und eine Vorrichtung zum Abkühlen eines aus einer Breitschlitzdüse in ein Kühlsystem extrudierten Schmelzefilms bekannt.

Gegenstand der Druckschrift ist, den Schmelzefilm nach dem Extruder möglichst schnell und tief abzukühlen, ohne daß es zu einem zu frühen Abplatzen des Schmelzefilms von einer Metalloberfläche innerhalb eines Kühlsystems kommt.

In der DE-A-36 35 302 wird nicht auf eine Situation in einer Folienproduktionsanlage eingegangen, die dazu führt, daß der Schmelzefilm wegen einer definierten Prozeßstörung bei der Folienherstellung nicht kontinuierlich aus dem Kühlsystem herausgeführt wird.

Aus der EP-A-0 575 786 ist bekannt, in Offset-Druckmaschinen mittels einer geeigneten Vorrichtung ein Aufwickeln einer gerissenen Papierbahn auf einen Drucktuchzylinder der letzten Druckeinheit zu verhindern.

Die geeignete Vorrichtung besteht dabei aus Mitteln zum Einführen der gerissenen Papierbahn in Mittel zum Abziehen der Papierbahn, wobei die Mittel zum Abziehen zwei ortsfest angeordnete, zueinander achsparallel ausgerichtete und drehantreibbare Rollen umfassen, zwischen welchen Rollen die Papierbahn im Bedarfsfalle eingeführt und abgezogen wird.

Im Normalfall der Offset-Druckmaschine ist also die aus den Rollen (Walzen) und deren Antrieb bestehende Walzeneinheit ohne Funktion.

Es ist daher Aufgabe der Erfindung, ein Arbeitsverfahren zu schaffen, wonach in einer Anlage zur Herstellung thermoplastischer Kunststoffolien im Falle des Auftretens definierter Prozeßstörungen der Schmelzefilm bei aufrechterhaltenem Extrusionsprozeß aus der Kühleinrichtung kontinuierlich abgezogen wird.

Femer ist es Aufgabe der Erfindung, eine Vorrichtung zur Durchführung des Verfahrens zu schaffen, die in einer Folienproduktionsanlage den Schmelzefilm aus der Kühleinrichtung gesteuert transportiert und der Weiterbehandlung entzieht, d.h. einer anderen Verwertung zuführt.

Des weiteren ist es Aufgabe der Erfindung, in eine Folienproduktionsanlage eine solche Walzeneinheit zu integrieren, die bei einer definierten Prozeßstörung den Schmelzefilm kontinuierlich von der Kühlwalze abzieht.

Gelöst wird die Aufgabe durch die Merkmale der unabhängigen Patentansprüche 1, 10, 11 und 12.

Mit anderen Worten, die Aufgabe der Erfindung wird dadurch gelöst, daß eine Führungswalze zusammen mit einer angetriebenen Anpreßwalze in den Lauf des Schmelzefilms nach der Kühlwalze angeordnet ist. Durch Anpressen der im allgemeinen gummierten Anpreßwalze an die im allgemeinen verchromte Führungswalze mit dem dazwischen liegenden Schmelzefilm wird über einen Antrieb der gummierten Anpreßwalze eine ausreichende Zugkraft erzeugt, um den Schmelzefilm von der Kühlwalze zu lösen und abzuziehen.

Die Anpreßwalze wird dabei nur im Bedarfsfall aktiviert, d.h. angelegt und angetrieben. Bei einem normalen Folienproduktionsprozeß ist die Anpreßwalze nicht im Eingriff mit der Führungswalze. Damit sind schädliche Auswirkungen auf die Folie, wie z.B. Abrieb und Oberflächenbeschädigungen, ausgeschaltet.

Die Zustellbewegung der Anpreßwalze kann entweder linear über Führungen oder rotatorisch über Schwenkhebel ausgeführt werden. Das Betätigen und Anlegen der Anpreßwalze erfolgt entweder hydraulisch mittels einer Kolben-Zylindereinheit, mechanisch oder vorzugsweise pneumatisch über ebenfalls eine Kolben-Zylindereinheit.

Die Kolben-Zylindereinheit muß daher genügend Kraft erzeugen, um über eine Flächenpressung auf die Kontaktfläche zwischen Anpreßwalze und Führungswalze ausreichend Reibung auf den Schmelzefilm zu erzeugen.

Die Führungs- und Anpreßwalze bilden zusammen eine Walzeneinheit aus.

Die Walzeneinheit kann entweder an bestehende Folienproduktionsanlagen angebaut und die darin bereits vorhandenen Führungswalzen mitverwenden, z.B. bei Dickenmeßgeräteständem mit den darin vorhandenen Führungswalzen. Die Walzeneinheit kann aber auch als vollständig eigenständiges Gerät, z.B. mit integrierter Zugkraftmessung oder -feststellung, ausgeführt werden. In einem solchen Fall ist die Walzeneinheit auch nachträglich in Folienproduktionsanlagen integrierbar.

Gesteuert und geregelt wird die Walzeneinheit aus der Steuerung der Gesamtanlage heraus. Die Anpreßwalze kann durch unterschiedlichste Gegebenheiten aktiviert werden.

Das sind beispielsweise:
- Filmrißsensoren in der Anlage
- nachlassende Zugkraft auf die Tänzerwalze oder fehlende Anpreßkraft auf der Zugmeßdose in den nachgeordneten Anlagenteilen,
- Handeingabe durch Bediener,
- nachlassender Antriebsstrom im Antrieb der Kühlwalze.

Bei der Detektierung einer dieser Zustände wird zunächst die Anpreßwalze auf Anlagendrehzahl beschleunigt und anschließend an die Führungswalze angelegt. Damit wird ein Zug auf den Schmelzefilm zwischen der Anpreßwalze und der Führungswalze aufgebaut.

Der Antrieb der Anpreßwalze kann dabei z.B. über eine Momentenregelung betrieben werden, so daß eine konstante Zugkraft im Schmelzefilm erreicht und aufrechterhalten wird. Durch Einbau einer Überholkupplung in den Antriebsstrang der Anpreßwalze, kann eine Überbestimmung bei erneut eintretender Zugkraft aus den nachgeordneten Anlagenteilen vermieden werden. Die Zugkraft aus den der Walzeneinheit nachgeordneten Produktionsanlageteilen hat damit immer Vorrang gegenüber der Walzeneinheit.

Der Antriebsmotor der Anpreßwalze kann entweder direkt auf die Achse der Anpreßwalze aufgesetzt werden oder aber über einen Riementrieb, der entweder im Schwenkpunkt der Anpreßwalze bzw. gestellfest angeordnet ist, das erforderliche Moment auf die Anpreßwalze übertragen.

Es ist zweckmäßig, der Walzeneinheit entweder einen sogenannten Notwickler nachzuordnen oder die Möglichkeit vorzusehen, den abgezogenen Schmelzefilm direkt einer Schneidmühle zuzuführen, um somit das während des Stillstandes der Anlagenteile produzierte Material schnellstmöglich zu entsorgen.

Mit der erfindungsgemäßen Lösung wird ein Abschalten des Extrusionsprozesses während des Auftretens einer definierten Prozeßstörung nicht mehr erforderlich. Damit wird ein relativ lang andauernder Anfahrprozeß des Extruders vermieden. Die normale Folienproduktion kann sofort nach Behebung der Prozeßstörung wieder aufgenommen werden.

Die Erfindung wird nachstehend anhand von Ausführungsbeispielen näher dargestellt.

In den Zeichnungen zeigen:
- Figur 1: eine schematisch dargestellte Folienproduktionsanlage mit integrierter Walzeneinheit in der Seitenansicht,
- Figur 2: eine schematisch dargestellte Folienproduktionsanlage mit einem Wasserbad und eine nach dem Wasserbad angeordnete Walzeneinheit in der Seitenansicht,
- Figur 3: eine Walzeneinheit in der Seitenansicht,
- Figur 4: eine schematisch dargestellte Walzeneinheit in der Seitenansicht.

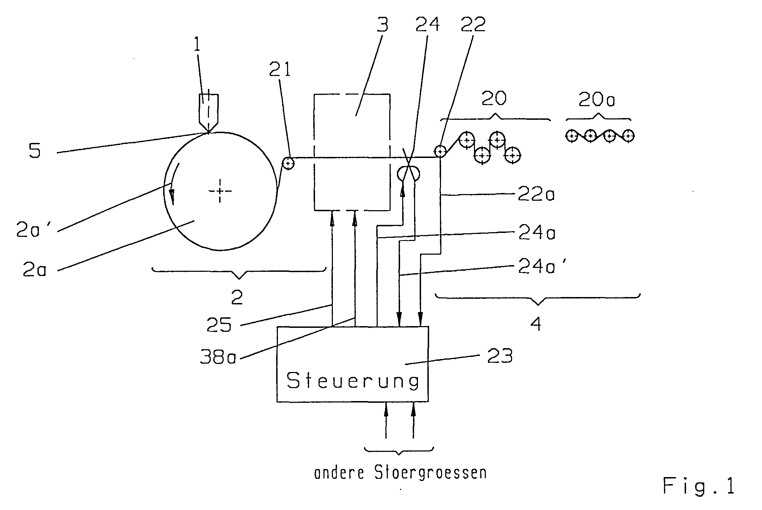

Figur 1 zeigt den Aufbau einer Produktionsanlage für Polyesterfolie mit den Anlagenbereichen 2,3 und 4. Der Anlagenbereich 2 ist eine Kühleinrichtung und umfaßt eine Breitschlitzdüse 1, aus der der Schmelzefilm 5 austritt und auf eine Kühlwalze 2a aufgetragen wird. Die Kühlwalze 2a ist dabei in Richtung des Pfeiles 2a' drehangetrieben.

Nach der Kühlwalze 2a ist eine Abnahmewalze 21 angeordnet, über die der abgekühlte Schmelzefilm 5 von der Kühlwalze 2a abgenommen wird und zu dem Anlagenbereich 3 der Walzeneinheit und von dort zu dem Anlagenbereich 4 der Walzenanordnung gelangt.

### Der Funktionsablauf ist folgender:

Aus der Breitschlitzdüse 1 wird das den Schmelzefilm 5 bildende Extrudat in einer vorgegebenen Breite auf die Kühlwalze 2a extrudiert.

Die Kühlwalze 2a wird von einem in der Zeichnung nicht dargestellten Antrieb in Richtung des Pfeiles 2a' angetrieben.

Nach vollständigem Abkühlen des Schmelzefilms 5 wird dieser über eine Abnahmewalze 21 von der Kühlwalze 2a abgenommen und durch die Walzeneinheit 3 über eine Umlenkwalze 22, die mit wenigstens einer Kraftmeßeinrichtung ausgerüstet ist, der Walzenanordnung 4 zugeführt, die Heizwalzen 20 und Reckwalzen 20a umfaßt.

In der Walzenanordnung 4 wird der Schmelzefilm 5 einer an sich bekannten weiteren Behandlung unterzogen, um in deren Ergebnis z.B. eine Polyester-Flachfolie zu erhalten.

Wird z.B. mittels der in der Umlenkwalze 22 integrierten und an sich bekannten Kraftmeßeinrichtung festgestellt, daß eine aus dem Ziehen bzw. Transport des Schmelzefilms 5 resultierende, definierte Zugkraft nicht anliegt, weist dies auf eine Prozeßstörung im Anlagenbereich 4 hin.

Die Kraftmeßeinrichtung ist signalübertragend über die Steuerleitung 22a mit der Steuerung 23 verbunden.

Eine z.B. vor der Umlenkwalze 22 angeordnete Schneideinrichtung 24 wird, nachdem die definierte Prozeßstörung bei der Umlenkwalze 22 erfaßt und der Steuerung 23 detektiert wurde und daraufhin die Anpreßwalze 3b aktiviert wird und den Schmelzefilm 5 erfaßt hat, über die Steuerleitung 24a von der Steuerung 23 angesteuert. Die Schneideinrichtung durchtrennt daraufhin den Schmelzefilm 5.

Das Ende des Durchtrennens des Schmelzefilms 5 wird der Steuerung 23 über die Steuerleitung 24a' signalisiert.

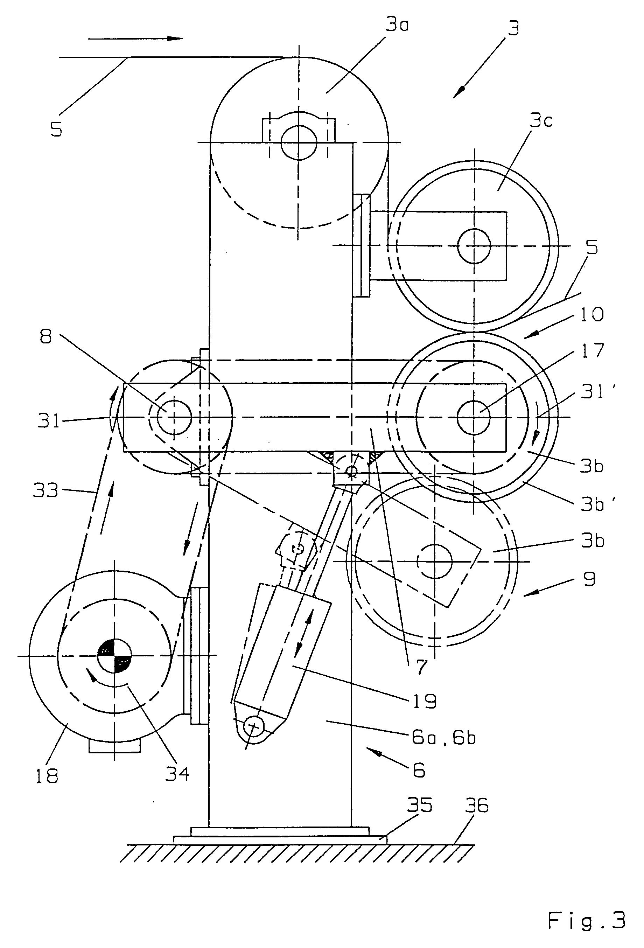

Die Antriebe 18,19 der Anpreßwalze 3b, siehe auch Figur 3, werden über die Steuerleitungen 25 und 38a angesteuert.

Die Anpreßwalze 3b zieht unter Aufrechterhaltung eines vorgegebenen Anpreßdruckes den Schmelzefilm 5 gemeinsam mit der Führungswalze 3c mit einer dem Extrusionsprozeß adäquaten Geschwindigkeit kontinuierlich von der Kühlwalze 2a ab und führt diesen einer Verwertung zu.

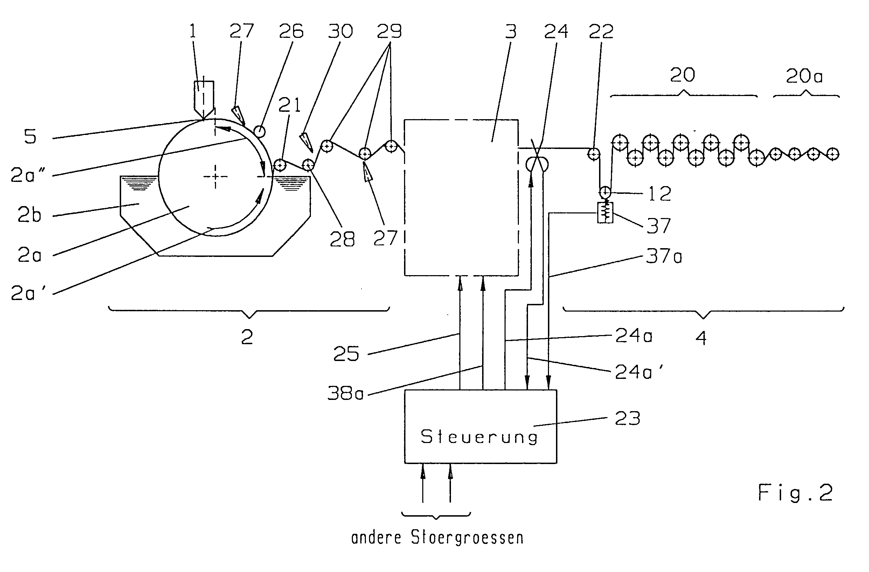

Figur 2 zeigt einen schematischen Aufbau einer Folienproduktionsanlage für Polypropylenfilm. Der Aufbau kann, je nach Maschinentyp, variieren. Gezeigt wird der prinzipielle Aufbau. Über die Breitschlitzdüse 1 wird der Schmelzefilm 5 in der vorgegebenen Breite auf die Kühlwalze 2a extrudiert. Die Kühlwalze 2a wird über ein nicht gezeigtes Antriebssystem gemäß des Pfeiles 2a' angetrieben. Die Kühlwalze 2a ist innen mit Wasser gekühlt und läuft in einem Wasserbad 2b, so daß der Schmelzefilm auch auf der Außenseite im Wasserbad gekühlt werden kann.

Nach vollständigem Erstarren wird der Schmelzefilm 5 über eine Abnahmewalze 21 abgenommen. Bevor auf dem freien Bereich 2a'' des Kühlwalzenmantels erneut Schmelzefilm 5 aufgebracht werden kann, muß dieser vom Wasser befreit und getrocknet werden. Dies geschieht durch Anlegen einer gummierten Abquetschwalze 26, sowie durch nachgeordnete Luftdüsen 27. Damit wird die Oberfläche des Walzenmantels vollständig vom Wasser befreit. Der über die Abnahmewalze 21 von der Kühlwalze 2a abgenommene Schmelzefilm 5 könnte dem Wasserbad 2b nochmals zugeführt werden, um einen zusätzlichen Kühleffekt zu erreichen.

Nach Verlassen des Wasserbades 2b wird der Schmelzefilm 5 über eine Umlenkwalze 28 und ein Walzensystem 29 geführt und mit Hilfe von sogenannten Luftmessern 30 vom anhaftenden Wasser befreit.

Der Kühleinrichtung 2 kann, wie an sich bekannt, eine Dickenmeßeinrichtung für den Schmelzefilm 5 nachgeordnet sein, die entsprechende Führungswalzen für den Schmelzefilm 5 besitzt. Nach der Dickenmeßeinrichtung wird der Schmelzefilm einer Längsverstreckung zugeführt.

Der Aufbau einer Längsverstreckeinrichtung ist im Prinzip ähnlich wie in Figur 1, nur, spezifisch für Polypropylen, mit einer größeren Anzahl von Heizwalzen 20 ausgerüstet.

Nach der Kühleinrichtung 2 ist, wie in Figur 1 dargestellt, eine Walzeneinheit 3 und gegebenenfalls eine Schneideinrichtung 24 in die Folienproduktionsanlage eingeordnet.

Die Walzeneinheit 3 wird entsprechend der gemäß Figur 1 beschriebenen Funktionsweise gesteuert.

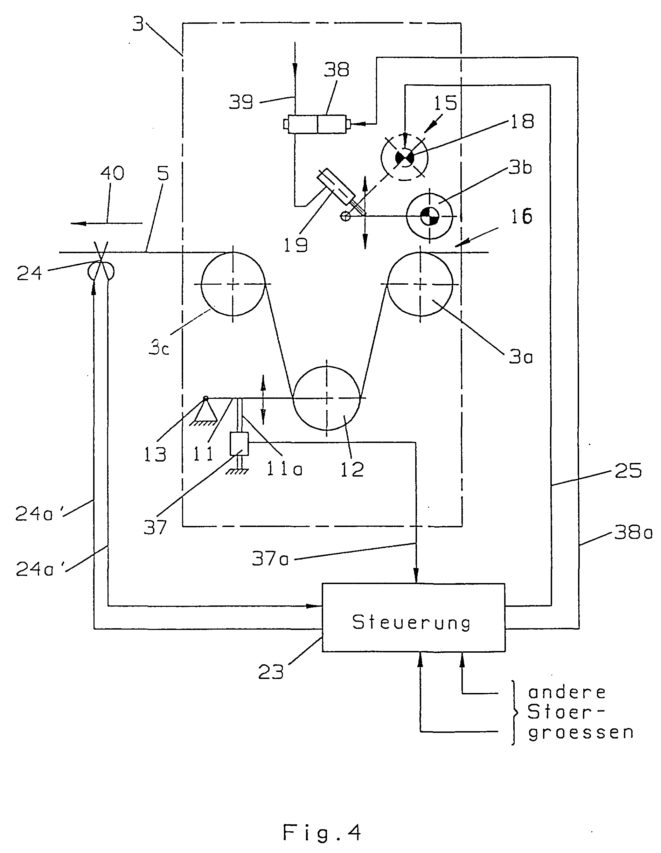

Vorteilhaft gemäß der Ausbildung nach Figur 2 ist, daß die nicht dargestellte Dickenmeßeinrichtung mit der Walzeneinheit 3 kombiniert sein kann, d.h., daß eine der Führungswalzen der Dickenmeßeinrichtung die mit der Anpreßwalze 3b zusammenwirkende Führungswalze 3c gemäß Figur 3 bzw. die Führungswalze 3a gemäß Figur 4 sein kann.

Die Einrichtung zum Feststellen einer definierten Prozeßstörung besteht hier nicht aus einer in der Umlenkwalze 22 vorhandenen Kraftmeßeinrichtung, sondern aus einem mit einer Tänzerwalze 12 in Verbindung stehenden Wegmeßsystem 37.

Das Wegmeßsystem 37 steht über die Steuerleitung 37a mit der Steuerung 23 signalübertragend in Verbindung. Damit kann das Wegmeßsystem 37 über die Position der mit dem Schmelzefilm 5 in Kontakt stehenden Tänzerwalze 12 eine definierte Prozeßstörung feststellen. Über die Steuerleitung 37a wird die Prozeßstörung der Steuerung 23 signalisiert, die wiederum über die Steuerleitungen 25, 38a die Antriebe 18, 19 der Walzeneinheit 3 aktiviert.

Figur 3 zeigt eine mögliche Anordnung einer Walzeneinheit 3 im Detail.

Der abgekühlte Schmelzefilm 5 läuft um eine erste Führungswalze 3a, die als Leichtlaufwalze ausgebildet ist, der zweiten Führungswalze 3c zu, die ebenfalls als Leichtlaufwalze ausgebildet sein kann. Beide Walzen sind an Stützen 6a, 6b eines Ständers 6 angeordnet.

Die Anpreßwalze 3b mit dem gummierten Walzenmantel 3b' ist an einem Schwenkhebel 7 befestigt. Dieser Schwenkhebel ist drehbar um die Achse 8 am Ständer 6 befestigt. Über Riemenscheiben 31, 31' und Riemen 32 wird die Anpreßwalze 3b angetrieben. Die Riemenscheibe 31 ist eine Doppelriemenscheibe. Über die Riemenscheibe 31 wird ein weiterer Riemen 33 und eine Riemenscheibe 34, die am Antrieb 18 angeflanscht ist, angetrieben. Der Riemen 33 bzw. 32 kann entweder als Flachriemen, als Zahnriemen oder Keilriemen ausgeführt sein.

Die gesamte Schwenkhebeleinrichtung 7 ist über den Antrieb 19, eine Kolben-Zylindereinheit, aus der Ruheposition 9 in eine Arbeitsposition 10 schwenkbar.

Der gesamte Ständer 6 mit den Walzen 3a, 3b, 3c und den Antrieben 18, 19 ist über die Fundamentplatte 35 mit dem Fundament 36 verbunden. Im Bereich der Achse 17 der Anpreßwalze 3b kann eine Überholkupplung angeordnet sein, so daß im Falle von erneut auftretendem Zug aus dem nachgeordneten Anlagenbereich 4 bzw. den Walzen 20, 20a dieser Zug den Schmelzefilm 5 von der Kühlwalze 2a abzieht, siehe auch Figur 1 und 2.

Figur 4 zeigt ein Anordnungsschema einer eigenständigen Walzeneinheit 3, die aus zwei achsparallel zueinander angeordneten Führungswalzen 3a, 3c und einer Tänzerwalze 12 sowie einer Anpreßwalze 3b, besteht, wobei die Anpreßwalze 3b aus einer Ruheposition 15 auf die zweite Führungswalze 3a in eine Arbeitsposition 16 zustellbar ist.

Der Schmelzefilm 5 wird, von der Kühleinrichtung 2 kommend, siehe auch Pfeil 40, über die Führungswalze 3a zu der Tänzerwalze 12 umgeleitet, von der aus der Schmelzefilm 5 über die weitere Führungswalze 3c in die nachgeordnete Walzenanordnung 4 bzw. Walzen 20, 20a geführt wird.

Gemäß der Erfindung wird anstelle der in der Umlennkwalze 22 gemäß Figur 1 und 2 vorhandenen Kraftmeßeinrichtung die definierte Prozeßstörung hier mittels eines mit der Tänzerwalze 12 zusammenarbeitenden Wegmeßsystems 37 erfaßt.

Die Tänzerwalze 12 pendelt entsprechend des Zuges im Schmelzefilm 5 um die Achse 13.

Der Schwenkhebel 11 wirkt über die Verbindung 11a auf das ortsfeste Wegmeßsystem 37.

Das Wegmeßsystem 37 ist über die Steuerleitung 37a mit der Steuerung 23 signalübertragend verbunden.

Mit der Steuerung 23 sind, wie bereits in den Figuren 1 und 2 dargestellt, ferner die Antriebe 18 und 19 verbunden.

Der Antrieb 18 ist dabei ein elektromotorischer Antrieb, während der Antrieb 19 eine pneumatische oder hydraulische Stelleinheit ist.

Der Antrieb 19 wird über ein Magnetventil 38 druckmittelbeaufschlagt und zwar über die von einer nicht dargestellten Druckquelle zum Magnetventil 38 geführte Druckleitung 39.

Die Ansteuerung des Magnetventils 38 erfolgt über die Steuerleitung 38a.

Der Funktionsablauf der gegenüber in Figur 3 veränderten Walzeneinheit 3 unterscheidet sich im Ausführungsbeispiel gemäß Figur 4 dadurch, daß die definierte Prozeßstörung auf eine andere Art, nämlich mittels der Wegmeßeinrichtung 37 erfaßt wird.

## Patentansprüche

1. Verfahren zum kontinuierlichen Abziehen eines aus einer Breitschlitzdüse (1) auf eine drehangetriebene Kühlwalze (2a), die zugleich als Abzugswalze verwendbar ist, extrudierten Schmelzefilms (5), der nach dem Verlassen der Kühlwalze (2a) unter Aufrechterhalten einer Abzugsgeschwindigkeit, die der Geschwindigkeit des Extrusionsprozesses adäquat ist, gegebenenfalls weiter abgekühlt wird, bis der Schmelzefilm (5) dehnungsarm ist, daraufhin der Schmelzefilm unter teilweisem Umschlingen wenigstens einer drehend gelagerten Führungswalze (3a, 3c), die nach der Kühlwalze (2a) angeordnet ist, zugeführt und nachfolgend in einer vorhandenen Walzenanordnung (4) einer Weiterbehandlung unterzogen wird, **dadurch gekennzeichnet,** daß im Falle des Auftretens einer definierten Prozeßstörung während der Weiterbehandlung des Schmelzefilms (5) der Schmelzefilm bei weiterlaufendem Extrusionsprozeß einer Walzeneinheit (3), bestehend aus der Führungswalze (3a;3c) und einer auf die Führungswalze (3a;3c) zustellbaren und drehangetriebenen Anpresswalze (3b), zugeführt, innerhalb der Walzeneinheit (3) reibschlüssig erfaßt und mit der den Extrusionsprozeß adäquaten Abzugsgeschwindigkeit von der Kühlwalze (2a) abgezogen und damit der Weiterbehandlung entzogen wird.

2. Verfahren nach Anspruch 1, **dadurch gekennzeichnet,** daß die Prozeßstörung meßtechnisch erfaßt und einer Steuereinheit (23) der Folienproduktionsanlage signalisiert wird.

3. Verfahren nach Anspruch 1, **dadurch gekennzeichnet,** daß die definierte Prozeßstörung eine auf den Schmelzefilm (5) wirkende Zugkraft ist.

4. Verfahren nach den Ansprüchen 2 und 3, **dadurch gekennzeichnet,** daß die Zugkraft mittels wenigstens einer der Walzeneinheit (3) nachgeordneten Kraftmeßeinrichtung gemessen wird.

5. Verfahren nach Anspruch 4, **dadurch gekennzeichnet,** daß die Kraftmeßeinrichtung eine Zugmeßdose ist.

6. Verfahren nach den Ansprüchen 2 und 3, **dadurch gekennzeichnet,** daß die Zugkraft mittels eines mit der Walzeneinheit (3) in Verbindung stehenden Wegmeßsystems (37) festgestellt wird.

7. Verfahren nach Anspruch 2, **dadurch gekennzeichnet,** daß, nachdem die Prozeßstörung signalisiert ist, der Schmelzefilm (5) nach der Walzeneinheit (3) über seine Breite durchtrennt wird.

8. Verfahren nach Anspruch 7, **dadurch gekennzeichnet,** daß das Durchtrennen automatisch erfolgt.

9. Verfahren nach den Ansprüchen 1 bis 3, **dadurch gekennzeichnet,** daß, nachdem die Prozeßstörung signalisiert ist, der Schmelzefilm (5) mittels einer innerhalb der Walzeneinheit (3) vorhandenen, drehantreibbar angeordneten Anpreßwalze (3b) an die den Schmelzefilm (5) umschlingende Führungswalze (3a;3c), die als Leichtlaufwalze ausgebildet ist, gepreßt wird, der Schmelzefilm (5) daraufhin von der Kühlwalze (2a) abgezogen und damit der Weiterbehandlung entzogen wird.

10. Folienproduktionsanlage zur Durchführung des Verfahrens nach den Ansprüchen 1 bis 9, mit einer Breitschlitzdüse (1) und einer Kühleinrichtung (2), die die Kühlwalze (2a) umfaßt, mit wenigstens einer nach der Kühleinrichtung (2) angeordneten und drehend gelagerten Führungswalze (3a, 3c) und wenigstens einer nach der Führungswalze (3a, 3c) vorhandenen Walzenanordnung (4) zum Weiterbehandeln des Schmelzefilms (5) sowie einer Steuerung (23), **dadurch gekennzeichnet,** daß eine Walzeneinheit (3) die Führungswalze (3a;3c) und eine auf die Führungswalze (3a;3c) zustellbare und drehantreibbare Anpreßwalze (3b) besitzt, die, im Falle einer während der Behandlung des Schmelzefilms (5) auftretenden, definierten Prozeßstörung in der Walzenanordnung (4), zusammen mit der Führungswalze (3a;3c) den Schmelzefilm (5) bei aufrechterhaltenem Extrusionsprozeß über dessen Breite erfaßt und der Weiterbehandlung entzieht.

11. Folienproduktionsanlage nach Anspruch 10, **dadurch gekennzeichnet,** daß die Kühleinrichtung (2) die Kühlwalze (2a) und zusätzlich ein Wasserbad (2b) umfaßt.

12. Walzeneinheit zur Verwendung in einer Folienproduktionsanlage, insbesondere zum Abziehen eines in eine Kühleinrichtung (2) extrudierten Schmelzefilms (5) bei einer auftretenden, definierten Prozeßstörung in einer der Walzeneinheit (3) nachgeordneten Walzenanordnung (4), mit einer drehbeweglich gelagerten Führungswalze (3a) und einer dazu vertikal beabstandet und achsparallel angeordneten zweiten drehbeweglich gelagerten Führungswalze (3c), die gemeinsam in einem aus einer ersten und einer zweiten Stütze (6a,6b) bestehenden Ständer (6) getragen sind, und einer Anpreßwalze (3b), die aus einer Ruheposition (9) auf die zweite Führungswalze (3c), die als Leichtlaufwalze ausgebildet ist, in eine Arbeitsposition (10) zustellbar ist, wobei die Anpreßwalze (3b) drehangetrieben ist.

13. Walzeneinheit zur Verwendung in einer Folienproduktionsanlage, insbesondere zum Abziehen eines in eine Kühleinrichtung (2) extrudierten Schmelzefilms (5) bei einer auftretenden, definierten Prozeßstörung in einer der Walzeneinheit (3) nachgeordneten Walzenanordnung (4), mit
a) einer ersten drehbeweglich gelagerten Führungswalze (3a),
b) einer achsparallel zur ersten Führungswalze (3a) angeordneten zweiten Führungswalze (3c), wobei die erste und zweite Führungswalze (3a,3c) gemeinsam in einem Ständer (6) getragen sind,
c) einer zwischen der ersten und zweiten Führungswalze (3a,3c) achsparallel, jedoch vertikal versetzt angeordneten Tänzerwalze (12), die um eine Achse (13) pendelnd gelagert ist, und
d) einer aus einer Ruheposition (15) auf die erste Führungswalze (3a) in eine Arbeitsposition (16) zustellbaren Anpreßwalze (3b),
wobei die Anpreßwalze (3b) drehangetrieben ist.

14. Walzeneinheit nach den Ansprüchen 12 und 13, **dadurch gekennzeichnet,** daß die Anpreßwalze (3b) im Bereich ihrer Achse (17) eine an sich bekannte Überholkupplung besitzt, wonach bei erneutem Zuführen des Schmelzefilms (5) zu den der Walzeneinheit (3) nachgeordneten und eine Zugkraft auf den Schmelzefilm (5) ausübenden Walzenanordnungen (4) der Schmelzefilm (5) durch die Walzenanordnungen (4) von der Kühlwalze (2a) abgezogen wird.

15. Walzeneinheit nach den Ansprüchen 12 und 13, **dadurch gekennzeichnet,** daß als Antrieb (18) ein in die Anpreßwalze (3b) integrierter Elektromotor vorgesehen ist.

16. Walzeneinheit nach den Ansprüchen 12 und 13, **dadurch gekennzeichnet,** daß als Antrieb (18) ein von der Anpreßwalze (3b) getrennt angeordneter Elektromotor vorgesehen ist.

17. Walzeneinheit nach den Ansprüchen 12 und 13, **dadurch gekennzeichnet,** daß die Anpreßwalze (3b) einen gummierten Walzenmantel (3b')besitzt.

18. Walzeneinheit nach den Ansprüchen 12 und 13, **dadurch gekennzeichnet,** daß die Anpreßwalze (3b) mittels einer einen Antrieb (19) aufweisenden Vorrichtung zugestellt wird.

19. Walzeneinheit nach den Ansprüchen 12 bis 18, **gekennzeichnet durch** ihre Anordnung in der Folienproduktionsanlage nach der Kühleinrichtung (2) für den extrudierten Schmelzefilm (5).

## Claims

1. Method for continuously withdrawing a molten film (5) extruded from a sheet die (1) onto a cooling roller (2a) which is driven in rotation and at the same time is usable as a withdrawal roller, the molten film (5) optionally been cooled further after leaving the cooling roller (2a) until the molten film (5) has limited extensibility, whilst a withdrawal speed adequate for the speed of the extrusion process is maintained, the molten film (5) then being supplied to and partially wound around at least one rotatably mounted guide roller (3a; 3c) disposed downstream of the cooling roller (2a), and subsequently being subjected to a further treatment in an available array of rollers (4), **characterized in that,** in the event of the occurrence of a predetermined process disturbance during the further treatment of the molten film (5), the molten film is supplied, whilst the extrusion process continues, to a roller unit (3) consisting of the guide roller (3a; 3c) and of a pressure roller (3b) which can be advanced towards the guide roller (3a; 3c) and is driven in rotation, and is gripped frictionally within the roller unit (3) and withdrawn from the cooling roller (2a) with the withdrawal speed adequate for the extrusion process, and thereby taken away from the further treatment.

2. Method according to Claim 1, **characterized in that** the process disturbance is detected by metrology and is signalled to a control unit (23) of the film-production installation.

3. Method according to Claim 1, **characterized in that** the predetermined process disturbance is a tensile force acting on the molten film (5).

4. Method according to Claims 2 and 3, **characterized in that** the tensile force is measured by means of at least one force-sensing device disposed downstream of the roller unit (3).

5. A method according to Claim 4, **characterized in that** the force-sensing device is a load cell.

6. Method according to Claims 2 and 3, **characterized in that** the tensile force is determined by means of a path-measuring system (37) connected to the roller unit (3).

7. Method according to Claim 2, **characterized in that,** after the process disturbance is signalled, the molten film (5) is severed across its width, downstream of the roller unit (3).

8. Method according to Claim 7, **characterized in that,** the severing takes place automatically.

9. Method according to Claims 1 to 3, **characterized in that,** after the process disturbance is signalled, the molten film (5) is pressed, by means of a pressure roller (3b) which is present in the roller unit (3) and can be driven in rotation, against the guide roller (3a; 3c) around which the molten film (5) is wound and which is formed as a free-running roller, the molten film (5) thereupon being withdrawn from the cooling roller (2a) and thereby taken away from the further treatment.

10. Film-production installation for implementing the method according to Claims 1 to 9, with a sheet die (1) and a cooling device (2) which includes the cooling roller (2a), with at least one guide roller (3a; 3c) disposed downstream of the cooling device (2) and mounted rotatably, and at least one array of rollers (4) available downstream of the guide roller (3a; 3c) for the further treatment of the molten film (5), as well as a control unit (23), **characterized in that** a roller unit (3) is equipped with the guide roller (3a; 3c) and with a pressure roller (3b) which can be advanced towards the guide roller (3a' 3c) and can be driven in rotation and which, in the event of a predetermined process disturbance in the array of rollers (4) occurring during the treatment of the molten film (5), jointly with the guide roller (3a; 3c), grips the molten film (5) across its width and pulls it away from the further treatment whilst the extrusion process is maintained.

11. Film-production installation according to Claim 10, **characterized in that** the cooling device (2) comprises the cooling roller (2a) and, in addition, a water bath (2b).

12. Roller unit for use in a film-production installation, particularly for withdrawing a molten film (5) extruded into a cooling device (2), upon the occurrence of a predetermined process disturbance in an array of rollers (4) disposed downstream of the roller unit (3), with a rotatably mounted guide roller (3a) and a second rotatably mounted guide roller (3c) offset vertically relative thereto and arranged parallel to the axis thereof, the guide rollers being supported together in a stand (6) composed of a first support and a second support (6a, 6b), and with a pressure roller (3b) which can be advanced from a rest position (9) towards the second guide roller (3c), which is formed as a free-running roller, to a working position (10), the pressure roller (3b) being driven in rotation.

13. Roller unit for use in a film-production installation, particularly for withdrawing a molten film (5) extruded into a cooling device (2) upon the occurrence of a predetermined process disturbance in an array of rollers (4) disposed downstream of the roller unit (3), with:
a) a first rotatably-mounted guide roller (3a),
b) a second guide roller (3c) arranged parallel to the axis of the first guide roller (3a), the first and second guide rollers (3a, 3c) being supported together in a stand (6),
c) a compensating roller (12) which is disposed between the first and second guide rollers (3a, 3c), parallel to their axes but offset vertically, and which is mounted for oscillating about an axis (13), and
d) a pressure roller (3b) which can be advanced from a rest position (15), towards the first guide roller (3a), to a working position (16),
the pressure roller (3b) being driven in rotation.

14. Roller unit according to Claims 12 and 13, **characterized in that** the pressure roller (3b) has, in the region of its axis (17), an overrunning clutch known *per se,* by virtue of which, upon the resumption of the supply of the molten film (5) to the array of rollers (4), which is disposed downstream of the roller unit (3) and exerts a tensile force on the molten film (5), the molten film (5) is withdrawn from the cooling roller (2a) through the array of rollers (4).

15. Roller unit according to Claims 12 and 13, **characterized in that** an electric motor incorporated in the pressure roller (3b) is provided as actuator (18).

16. Roller unit according to Claims 12 and 13, **characterized in that** an electric motor separate from the pressure roller (3b) is provided as actuator (18).

17. Roller unit according to Claims 12 and 13, **characterized in that** the pressure roller (3b) has a rubberized roller surface (3b').

18. Roller unit according to Claims 12 and 13, **characterized in that** the pressure roller (3b) is advanced by means of a device comprising an actuator (19).

19. Roller unit according to Claims 12 to 18 **characterized by** its arrangement in the film-production installation downstream of the device (2) for cooling the extruded molten film (5).

## Revendications

1. Procédé pour le dévidage continu d'un film de fusion (5) extrudé à partir d'une filière plate (1) sur un cylindre de refroidissement (2a) entraîné par rotation, et pouvant être utilisé en même temps comme cylindre de dévidage, lequel film continue d'être réfrigéré éventuellement, après avoir quitté le cylindre de refroidissement (2a) en maintenant une vitesse de dévidage qui est adaptée à la vitesse du processus d'extrusion, jusqu'à ce que le film de fusion (5) ait une extensibilité réduite, le film de fusion étant amené ensuite par enroulement partiel à au moins un cylindre de guidage (3a, 3c) monté de façon pivotante, qui est disposé après le cylindre de refroidissement (2a) et étant soumis ensuite dans un agencement de cylindres (4) présent à un traitement ultérieur, caractérisé en ce que, s'il apparaît un incident de processus défini au cours du traitement ultérieur du film de fusion (5), le film de fusion est amené, avec le processus d'extrusion qui se poursuit, à une unité de cylindres (3) comprenant le cylindre de guidage (3a, 3c) et un cylindre d'appui (3b) qui peut être avancé vers le cylindre de guidage (3a, 3c) et est entraîné par rotation, est saisi à l'intérieur de l'unité de cylindres (3) avec un entraînement par friction, est dévidé du cylindre de refroidissement (2a) avec la vitesse de dévidage appropriée au processus d'extrusion et est donc retiré du traitement ultérieur.

2. Procédé selon la revendication 1, caractérisé en ce que l'incident de processus est enregistré par des appareils de mesure et est signalé à une unité de commande (23) de l'installation de production de films.

3. Procédé selon la revendication 1, caractérisé en ce que l'incident de processus défini est une force de traction agissant sur le film de fusion (5).

4. Procédé selon les revendications 2 et 3, caractérisé en ce que la force de traction est mesurée au moyen d'au moins un appareil capteur de force monté en aval de l'unité de cylindres (3).

5. Procédé selon la revendication 4, caractérisé en ce que l'appareil capteur de force est une boîte dynamométrique de traction.

6. Procédé selon les revendications 2 et 3, caractérisé en ce que la force de traction est déterminée au moyen d'un système de mesure de déplacement (37) qui est en liaison avec l'unité de cylindres (3).

7. Procédé selon la revendication 2, caractérisé en ce que, une fois que l'incident de processus est signalé, le film de fusion (5) est sectionné sur sa largeur après l'unité de cylindres (3).

8. Procédé selon la revendication 7, caractérisé en ce que le sectionnement s'effectue de façon automatique.

9. Procédé selon les revendications 1 à 3, caractérisé en ce que, une fois que l'incident de processus est signalé, le film de fusion (5) est pressé au moyen d'un cylindre d'appui (3b) présent à l'intérieur de l'unité de cylindres (3) et disposé de façon à pouvoir être entraîné par rotation, sur le cylindre de guidage (3a, 3c) enroulant le film de fusion (5) qui est conçu comme un cylindre de marche léger, le film de fusion (5) est ensuite dévidé du cylindre de refroidissement (2a) et est soustrait au traitement ultérieur.

10. Installation de production de films pour l'application du procédé selon les revendications 1 à 9, avec une filière plate (1) et un appareil de réfrigération (2), qui comprend le cylindre de refroidissement (2a), avec au moins un cylindre de guidage (3a, 3c) disposé en aval de l'appareil de réfrigération (2) et monté de façon pivotante et au moins un agencement de cylindres (4) présent après le cylindre de guidage (3a, 3c) pour le traitement ultérieur du film de fusion (5) et une commande (23), caractérisée en ce qu'une unité de cylindres (3) possède le cylindre de guidage (3a, 3c) et un cylindre d'appui (3b) pouvant être amené sur le cylindre de guidage (3a, 3c) et être entraîné par rotation, qui, au cas où un incident de processus défini surviendrait pendant le traitement du film de fusion (5) dans le dispositif à cylindres (4), saisit conjointement avec le cylindre de guidage (3a, 3c) le film de fusion (5) sur sa largeur en conservant le processus d'extrusion et le soustrait au traitement ultérieur.

11. Installation de production de films selon la revendication 10, caractérisé en ce que le dispositif réfrigérant (2) comprend le cylindre de refroidissement (2a) et en supplément un bain d'eau (2b).

12. Unité de cylindres pour utilisation dans une installation de production de films, en particulier pour le dévidage d'un film de fusion (5) extrudé dans un dispositif de refroidissement (2) lors d'un incident de processus défini dans un agencement de cylindres (4) placé en aval de l'unité de cylindres (3), avec un cylindre de guidage (3a) logé de façon mobile par rotation et un deuxième cylindre de guidage (3c) espacé dans le sens vertical, disposé en parallèle et monté de façon pivotante, qui sont supportés conjointement dans un montant (6) comprenant un premier support et d'un deuxième support (6a, 6b) et un cylindre d'appui (3b), qui peut être amené d'une position de repos (9) vers le deuxième cylindre de guidage (3c), qui est conçu comme un cylindre de marche léger, dans une position de travail (10), le cylindre d'appui (3b) étant entraîné par rotation.

13. Unité de cylindres pour utilisation dans une installation de production de films, en particulier pour le dévidage d'un film de fusion (5) extrudé dans un dispositif de refroidissement (2) lors d'un incident de processus défini dans un agencement de cylindres (4) placé en aval de l'unité de cylindres (3) avec
a) un premier cylindre de guidage (3a) logé de façon mobile par rotation,
b) un deuxième cylindre de guidage (3c) disposé parallèlement au premier cylindre de guidage (3a), le premier cylindre et le deuxième cylindre de guidage (3a, 3c) étant supportés conjointement dans un montant (6),
c)un rouleau tendeur (12) disposé en parallèle entre le premier et le deuxième cylindre de tension (3a, 3c), mais en décalé dans le sens vertical, qui est monté de façon oscillante autour d'un axe (13) et
d) un cylindre d'appui (3b) qui peut être amené d'une position de repos (15) au premier cylindre de guidage (3a) dans une position de travail (16), le cylindre d'appui (3b) étant entraîné par rotation.

14. Unité de cylindres selon les revendications 12 et 13, caractérisé en ce que le cylindre d'appui (3b) possède dans la zone de son axe (17) un accouplement de rattrapage connu en soi, avec lequel, lorsque le film de fusion (5) arrive à nouveau vers les agencements de cylindres (4) qui sont disposés en aval de l'unité de cylindres (3) et exercent une force de pression sur le film de fusion (5), le film de fusion (5) est dévidé par les agencements de cylindres (4) du cylindre de refroidissement (2a).

15. Unité de cylindres selon les revendications 12 et 13, caractérisée en qu'il est prévu comme entraînement (18) un moteur électrique intégré dans le cylindre d'appui (3b).

16. Unité de cylindres selon les revendications 12 et 13, caractérisée en ce qu'il est prévu comme entraînement (18) un moteur électrique disposé séparément du cylindre d'appui (3b).

17. Unité de cylindres selon les revendications 12 et 13, caractérisée en ce que le cylindre d'appui (3b) possède une enveloppe de cylindre (3b') caoutchoutée.

18. Unité de cylindres selon les revendications 12 et 13, caractérisée en ce que le cylindre d'appui (3b) est amené au moyen d'un dispositif présentant un entraînement (19).

19. Unité de cylindres selon les revendications 12 à 18, caractérisée par leur disposition dans l'installation de production de films après l'appareil réfrigérant (2) pour le film de fusion (5) extrudé.
